(19) **Europäisches Patentamt / European Patent Office / Office européen des brevets**

(11) **EP 3 415 222 A1**

(12) # EUROPEAN PATENT APPLICATION

(43) Date of publication:
19.12.2018 Bulletin 2018/51

(21) Application number: 17177646.1

(22) Date of filing: 23.06.2017

(51) Int Cl.:
**B01D 53/34** *(2006.01)*    **B01D 53/50** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.06.2017 CN 201710446925**

(71) Applicant: **Jiangnan Environmental Protection Group Inc.**
**Grand Cayman (KY)**

(72) Inventors:
• **LUO, Jing**
 **NANJING, Jiangsu 211100 (CN)**
• **WANG, Jinyong**
 **NANJING, Jiangsu 211100 (CN)**
• **ZHANG, Jun**
 **NANJING, Jiangsu 211100 (CN)**

(74) Representative: **Croce, Valeria et al**
**Jacobacci & Partners S.p.A.**
**Via Senato, 8**
**20121 Milano (IT)**

(54) **AUTOMATIC AMMONIA-ADDING SYSTEM AND METHOD FOR AMMONIA-BASED DESULFURIZATION DEVICE**

(57) The present invention discloses an automatic ammonia-adding system for an ammonia-based desulfurization device, using multi-stage control, automatically calculating a theoretical amount of ammonia based on gas amounts provided by an inlet continuous emission monitoring system (CEMS) and an outlet CEMS of the ammonia-based desulfurization device or associated gas amounts, a $SO_2$ concentration provided by the inlet CEMS, and a predetermined $SO_2$ concentration of the outlet CEMS; calculating a corrected theoretical amount of ammonia using half of the ratio of the actual amount of added ammonia to the actual amount of removed sulfur dioxide as a correction coefficient for the theoretical amount of ammonia; adding an ammonia absorbent equivalent to the corrected theoretical amount of ammonia $\pm 10\%$ to the ammonia-based desulfurization device through an ammonia metering means and an ammonia control valve; and then automatically controlling the actual ammonia flow rate based on the actual $SO_2$ concentration and change trend provided by the outlet CEMS as a feedback, thereby achieving automatic ammonia addition. The automatic ammonia-adding system of the present invention can achieve automatic ammonia addition to ensure that clean flue gas meets ultralow emission requirements, and is characterized by stable and reliable system operation, a high automation degree and a simple process.

EP 3 415 222 A1

## Description

## Technical Field

The present invention belongs to the field of environmental protection technologies, and in particular to an automatic ammonia-adding system and method for an ammonia-based desulfurization device.

## Background Art

At present, limestone desulfurization process and ammonia-based desulfurization process are mainstream processes in the whole world for removing sulfur dioxide from gases. In the limestone desulfurization process, large quantities of waste water and gypsum residues are produced during desulfurization, and a lot of investment and operating costs are required to treat these waste water and waste residues. Also, in the limestone desulfurization process, while 1 ton of sulfur dioxide is removed, about 0.7 ton of carbon dioxide is produced synchronously. With the ammonia-based desulfurization process, basically no waste water or waste residue is produced, and the added ammonia desulfurizer is converted into a useful ammonium sulfate fertilizer, thus it is more economical and more environmentally friendly. However, the existing ammonia-based desulfurization process often has the problems, such as ammonia slip, aerosol formation, etc.

Chinese patents CN 1283346C and CN 1321723C disclose a process for removing $SO_2$ from coal-fired flue gas by using ammonia as a removal agent, in which the $SO_2$ concentration in the clean gas is less than 100 mg/Nm$^3$. However, the amount of ammonia slip in the clean gas can be up to 12 mg/Nm$^3$.

Chinese Patent CN 100428979C discloses an ammonia-based desulfurization process with crystallization inside a tower and an apparatus thereof, wherein the desulfurization tower is designed to be of a multi-section structure, successively including an oxidation section, a crystallization section, a cooling absorption section, a main absorption section, and a dehydration-demisting section from bottom to top. In the process, the evaporating ability of a flue gas is utilized for crystallization to reduce operation energy consumption, the $SO_2$ concentration in the clean gas is less than 200 mg/Nm$^3$, and the ammonia content in the clean gas can be as low as 3 mg/Nm$^3$.

Chinese patent application No. CN 201710154157.3 discloses a method and a device for ammonia-based removal of sulfur oxides and dust from gas, wherein the device consists of a gas purification and removal system, an oxidation system, an ammonium sulfate post-processing system, an ammonia supply system and an auxiliary system, and uses a process of multipoint ammonia addition and multi-stage control, thereby significantly inhibiting ammonia slip and aerosol formation, and achieving efficient desulfurization and dedusting effects.

Chinese patent application No. CN 201610322999.0 discloses a pH-based automatically adjusting ammonia addition system, mainly including a control cabinet, an aqueous ammonia tank, a first aqueous ammonia pump, a second aqueous ammonia pump, a pressure transmitter, an electromagnetic flowmeter, an electric control valve and a pH transducer, wherein the control cabinet is respectively connected to the pressure transmitter, the electromagnetic flowmeter, the electric control valve, and the pH transducer; the control cabinet is connected to the first aqueous ammonia pump and the second aqueous ammonia pump; the inlet end of the first aqueous ammonia pump is connected to the aqueous ammonia tank and the outlet end of the first aqueous ammonia pump is respectively connected to an inlet of an ammonia-mixing chamber and an inlet of a circulating pump; the first aqueous ammonia pump is respectively connected to the pressure transmitter, the electromagnetic flowmeter, the electric control valve and the pH transducer; the inlet end of the second aqueous ammonia pump is connected to the aqueous ammonia tank and the outlet end of the second aqueous ammonia pump is respectively connected to the inlet of the ammonia-mixing chamber and the inlet of the circulating pump; the second aqueous ammonia pump is respectively connected to the pressure transmitter, the electromagnetic flowmeter, the electric control valve and the pH transducer; and the electric control valve is respectively connected to the inlet of the ammonia-mixing chamber and the inlet of the circulating pump.

An automatic ammonia-adding system with stable and reliable system operation, a high automation degree and a simple process and being applicable to an ammonia-based desulfurization device is still required to achieve automatic multipoint ammonia addition and multi-stage control in the ammonia-based desulfurization device, and inhibit ammonia slip and aerosol formation.

## Summary of the Invention

An object of the present invention is to provide an automatic ammonia-adding system with stable and reliable system operation, a high automation degree and a simple process and being applicable to an ammonia-based desulfurization device. The automatic ammonia-adding system can be especially used with a method and a device for ammonia-based removal of sulfur oxides and dust from gas as disclosed in Chinese patent application No. CN 201710154157.3.

A further object of the present invention is to provide a method of automatic ammonia-addition applicable to an ammonia-based desulfurization device and method.

**Brief Description of the Drawings**

Drawings are provided to assist in understanding of the present invention. However, the drawings are not intended to limit the present invention in a manner inconsistent with the claims. In the drawings,

Fig. 1 is a schematic diagram of an embodiment of the present invention.

Fig. 2 is a control scheme of automatic ammonia addition in accordance with an embodiment of the present invention.

**Description of the Preferred Embodiments**

In one aspect, the present invention provides an automatic ammonia-adding system for an ammonia-based desulfurization device, automatically calculating a theoretical amount of ammonia based on gas amounts provided by an inlet Continuous Emission Monitoring System (CEMS) and an outlet CEMS of the ammonia-based desulfurization device (or associated gas amounts), a $SO_2$ concentration provided by the inlet CEMS, and a predetermined $SO_2$ concentration of the outlet CEMS; calculating a corrected theoretical amount of ammonia using half of the ratio of the actual amount of added ammonia to the actual amount of removed sulfur dioxide as a correction coefficient for the theoretical amount of ammonia; and adding an ammonia absorbent equivalent to the corrected theoretical amount of ammonia $\pm 10\%$, preferably $\pm 5\%$, more preferably $\pm 3\%$, and still more preferably $\pm 2\%$, to the ammonia-based desulfurization device through an ammonia metering means and an ammonia control valve, and then automatically controlling the actual ammonia flow rate based on the actual $SO_2$ concentration and change trend provided by the outlet CEMS as a feedback, thereby achieving automatic ammonia addition.

The gas amounts of the inlet and outlet CEMSs (or associated gas amounts), the $SO_2$ concentrations of the inlet and outlet CEMSs, and the data of the ammonia metering are uploaded to a distributed control system to calculate the actual amount of added ammonia and the actual amount of removed sulfur dioxide, and then calculate the theoretical amount of ammonia, the correction coefficient for the amount of ammonia, and the corrected theoretical amount of ammonia.

The theoretical amount of ammonia, the correction coefficient for the theoretical amount of ammonia, and the corrected theoretical amount of ammonia are calculated as follows:

theoretical amount of ammonia = (gas amount of the inlet CEMS or associated gas amount ($Nm^3$/h)* inlet $SO_2$ concentration (mg/$Nm^3$) - gas amount of the outlet CEMS or associated gas amount ($Nm^3$/h)* predetermined $SO_2$ concentration of the outlet CEMS (mg/$Nm^3$))/1000/1000/64*34 kg/h

correction coefficient for theoretical amount of ammonia = actual molar number of added ammonia/actual molar number of removed sulfur dioxide/2

corrected theoretical amount of ammonia = theoretical amount of ammonia * correction coefficient for theoretical amount of ammonia

In the automatic ammonia-adding system of the present invention, an outlet $SO_2$ concentration gradient can be used as steps of the calculation of the correction coefficient for the theoretical amount of ammonia, i.e., different further correction coefficients can be set according to different ranges of the $SO_2$ concentration, such as 20-30, 50-80, 120-170 mg/$Nm^3$ and so on.

In the automatic ammonia-adding system of the present invention, slopes of temporal curve of the outlet $SO_2$ concentration value can be used as steps to judge the outlet $SO_2$ concentration change trend, i.e., different further correction coefficients can be set at different slopes (outlet $SO_2$ concentration change trend, e.g. less than 0, 0-1, 1-2, etc.) using a slope of temporal curve of the outlet $SO_2$ value as the basis for consideration.

In some embodiments, the automatic ammonia-adding system includes an ammonia supply system 2, an ammonia control valve 3, an ammonia metering means 4, an inlet CEMS 7 and an outlet CEMS 8. In some specific embodiments, the automatic ammonia-adding system includes an absorption tower 1, an ammonia supply system 2, an ammonia control valve 3, an ammonia flow meter 4, a circulating pump 6, an inlet CEMS 7, an outlet CEMS 8 and an oxidation section 9.

The ammonia supply system provides an ammonia absorbent, which is one or more of liquid ammonia, an aqueous ammonia and gaseous ammonia.

The automatic ammonia-adding system of the present invention may include one or more ammonia control valves, preferably at least 2 ammonia control valves with different control abilities, wherein a control valve with a large control ability is used to control the addition of 90-99% of corrected theoretical amount of ammonia, and a control valve with a small control ability is used for automatic feedback adjustment and control.

In some embodiments, the ammonia metering means is a flow meter, e.g. a volumetric flow meter or a mass flow meter, or a metering pump.

In some embodiments, the measured items for the inlet CEMS may include gas amount, $SO_2$ concentration, water content, dust content, temperature and pressure.

In some embodiments, the measured items for the outlet CEMS may include gas amount, $SO_2$ concentration, water content, dust content, temperature, pressure, nitrogen oxides content and free ammonia content.

In some embodiments, associated gas amounts, e.g. gas amounts calculated from a boiler load, a boil air volume or other parameters can be used to substitute for the gas amounts of inlet and outlet CEMSs, or gas amounts of the inlet and outlet CEMSs can be used to substitute for each other, and the water contents, temperatures and pressures of the inlet and outlet CEMSs can be used for gas amount correction calculation.

In a specific embodiment of the present invention, the ammonia-based desulfurization device comprises an absorption tower controlled section-wise, which tower is divided into an oxidation section, a cooling-and-washing section, a washing desulfurization section, and a fine particulate matters control section, wherein the cooling-and-washing section, the washing desulfurization section, and the fine particulate matters control section are respectively provided with a number of spray layers, the cooling-and-washing section concentrates the circulated washing liquid while cooling the raw flue gas, the washing desulfurization section removes by absorption sulfur dioxide in the flue gas, controls ammonia slip and aerosol formation, and the fine particulate matters control section scrubs off the fine particulate matters.

The ammonia-based desulfurization device uses multipoint ammonia addition so that the reaction is carried out sufficiently, and ammonia slip and aerosol formation can be avoided. The ammonia-containing desulfurization agent is added at the following locations: upper and lower layers of the oxidation section, inlet and outlet of the circulating pump, and the cooling-and-washing section.

In the liquid distributor of the washing desulfurization section, the liquid-to-gas ratio in each layer is not less than 1 L/m³, the spray coverage in each layer is not less than 130%, and the total spray coverage in the washing desulfurization section is not less than 300%.

In the fine particulate matters control section, the liquid-to-gas ratio in each layer is not less than 0.8 L/m³, and the spray coverage is not less than 110%.

The upper part of the absorption section and the upper part of the fine particulate matters control section are respectively provided with a layered demister. The demister is selected from a corrugated board, a filler, a baffle, a ridge, a screen, or a combination thereof. In some embodiments, an ammonia-based desulfurization device using the automatic ammonia-adding system of the present invention runs as follows:

a raw flue gas enters from the middle-lower part of an absorption tower, and is then emitted from a flue gas outlet on the top of the tower successively after cooling-and-washing, washing for desulfurization, and removing fine particulate matters by a washing liquid circulated by a circulating pump; and

an ammonia supply system supplements an ammonia absorbent by an ammonia control valve to predetermined ammonia-adding points such as an oxidation section of the absorption tower, a circulating pump, etc., thereby achieving automatic ammonia addition to the desulfurization system.

The circulating washing liquid can be concentrated (crystallized) in the cooling-and-washing process, and then processed to an ammonium sulfate product through an ammonium sulfate post-processing system. The ammonium sulfate post-processing system can include 1-3 stages of solid-liquid separators, a drier, and packaging machine connected successively.

The circulating liquid for absorption is oxidized by an oxygen-containing gas in the oxidation section, whereby at least a portion of sulfite contained therein is oxidized into sulfate. In some embodiments, the oxidation rate of the upper solution of the oxidation section is not less than 90% and the pH of the upper solution of the oxidation section ranges from 4.5 to 6.7, while the oxidation rate of the lower solution of the oxidation section is not less than 99%, and the pH of the lower solution of the oxidation section ranges from 3 to 6.3.

In some embodiments, the empty tower gas velocity of the absorption tower is 2-5 m/s.

In some embodiments, the operating temperature of the washing desulfurization section ranges from 40 to 60°C.

In some embodiments, the operating temperature of the fine particulate matters control section ranges from 35 to 55°C.

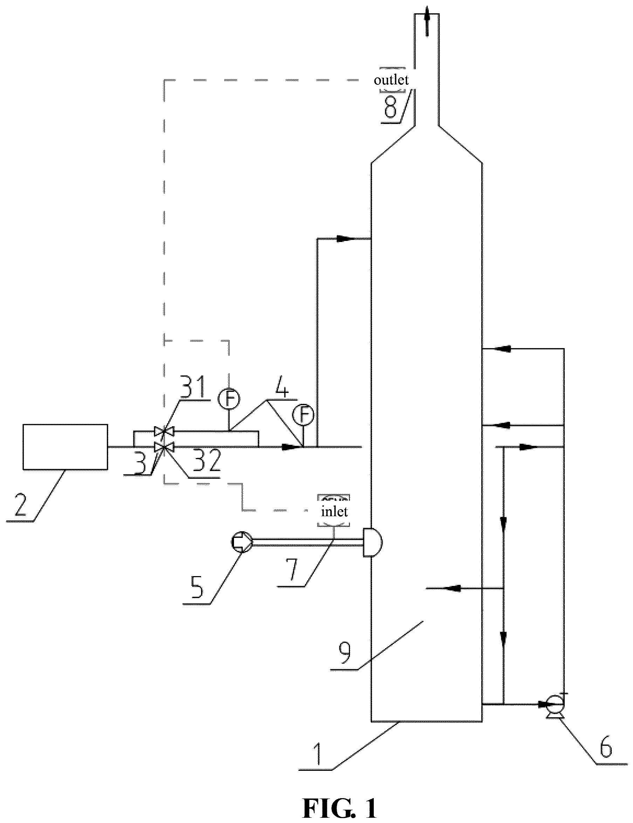

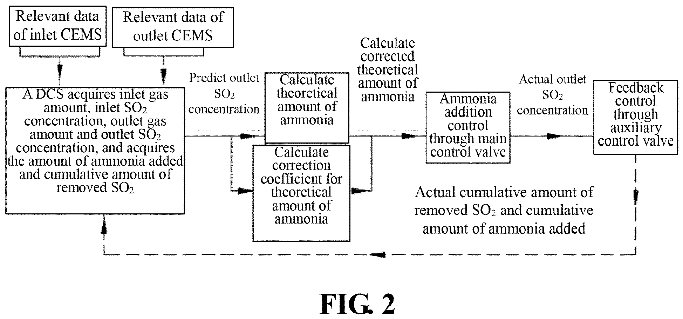

Here, a specific embodiment of the present invention is described with reference to Fig. 1 and Fig. 2, wherein the automatic ammonia-adding system includes an absorption tower 1, an ammonia supply system 2, an ammonia control valve 3, an ammonia metering means 4, a circulating pump 6, an inlet CEMS 7, an outlet CEMS 8 and an oxidation section 9.

A Distributed Control System (DCS) automatically calculates a theoretical amount of ammonia using a microprocessor based on gas amounts provided by the inlet CEMS 7 and the outlet CEMS 8 (or associated gas amounts), a $SO_2$ concentration provided by the inlet CEMS 7 and a predetermined $SO_2$ concentration of the outlet CEMS 8; calculates a corrected theoretical amount of ammonia using half of the ratio of the actual amount of added ammonia to the actual amount of removed sulfur dioxide as a correction coefficient for the theoretical amount of ammonia; adds an ammonia absorbent equivalent to the corrected theoretical amount of ammonia $\pm 10\%$, preferably $\pm 5\%$, more preferably $\pm 3\%$, and still more preferably $\pm 2\%$, to the ammonia-based desulfurization device through the ammonia metering means 4 and the ammonia control valve 3; and then automatically controls the actual ammonia flow rate based on the actual $SO_2$ concentration and change trend provided by the outlet CEMS 8 as a feedback, thereby achieving automatic ammonia addition.

Different further correction coefficients can be set according to different ranges of the $SO_2$ concentration (such as 20-30, 50-80, 120-170 mg/Nm$^3$, and so on).

It is possible to use a slope of temporal curve of the outlet $SO_2$ value as the basis for consideration, and different further correction coefficients can be set at different slopes (the outlet $SO_2$ concentration change trend, e.g. less than 0, 0-1, 1-2, etc.).

The ammonia absorbent supplied by the ammonia supply system 2 may be 20% aqueous ammonia.

Double control valves may be used to control automatic ammonia addition. The inlets of the ammonia control valves 3 are connected to the ammonia supply system 2, the outlets of the ammonia control valves 3 are connected to the ammonia addition points, such as the oxidization section 9 and the circulation pump 6, and the amount of ammonia added through the main ammonia control valve is, for example, 98% of the corrected theoretical amount of ammonia.

The measured items for the inlet CEMS 7 may include gas amount, $SO_2$ concentration, water content, dust content, temperature and pressure.

The measured items for the outlet CEMS 8 may include gas amount, $SO_2$ concentration, water content, dust content, temperature, pressure, nitrogen oxides content and free ammonia content.

The ammonia supply system 2 may include an aqueous ammonia tank, an aqueous ammonia unloading pump, an aqueous ammonia supply pump, an accident spray device and a breathing gas washing tank. An aqueous ammonia having a concentration of 20wt.% may be supplied as an ammonia absorbent, and the ammonia metering means may be a mass flow meter.

The ammonia-based desulfurization process is as follows:

a raw flue gas 5 enters from the middle-lower part of the absorption tower 1, and is then emitted from a flue gas outlet on the top of the tower successively after cooling-and-washing, washing for desulfurization, and removing fine particulate matters by a washing liquid circulated by the circulation pump 6; and

the ammonia supply system 2 supplements the aqueous ammonia absorbent through a main ammonia control valve 31 and an auxiliary ammonia control valve 32 to the ammonia addition points, such as the oxidization section 9 and the circulation pump 6.

The circulating washing liquid is oxidized, then concentrated to a solid content of 10-20 wt.% in the cooling-and-washing process, and then processed to an ammonium sulfate product through an ammonium sulfate post-processing system.

In the ammonia-based desulfurization process, specific ammonia addition control steps are as follows:

1) uploading the gas amounts of the inlet CEMS 7 and the outlet CEMS 8 (or associated gas amounts), the $SO_2$ concentrations of the inlet CEMS 7 and the outlet CEMS 8, and the ammonia metering data to the distributed control system (DCS), wherein the water content, temperature and pressure data of the inlet CEMS and the outlet CEMS can be used for the gas amount correction calculation;

2) predetermining the outlet $SO_2$ concentration by the DCS;

3) calculating the theoretical amount of ammonia to be added;

4) calculating the correction coefficient for the theoretical amount of ammonia;

5) calculating the corrected theoretical amount of ammonia;

6) controlling the ammonia flow rate to be 98% of the corrected theoretical amount of ammonia through the mass flow meter 4 and the main ammonia control valve 31 ;

7) acquiring the actual $SO_2$ concentration of the outlet CEMS 8 by the DCS;

8) controlling the auxiliary ammonia control valve 32 based on the actual $SO_2$ concentration and change trend of the outlet CEMS 8 as a feedback to allow the outlet $SO_2$ concentration to tend towards the predetermined $SO_2$ concentration; and

9) acquiring the actual ammonia flow rate and integrating and acquiring the actual amount of removed sulfur dioxide and integrating by the DCS to conduct the next round of control.

In another aspect, the present invention provides an automatic ammonia-adding method for an ammonia-based desulfurization device, comprising:

automatically calculating a theoretical amount of ammonia to be added from gas amounts provided by an inlet CEMS and an outlet CEMS of the ammonia-based desulfurization device (or associated gas amounts), a $SO_2$ concentration provided by the inlet CEMS, and a predetermined $SO_2$ concentration of the outlet CEMS;

calculating a corrected theoretical amount of ammonia using half of the ratio of the actual amount of added ammonia to the actual amount of removed sulfur dioxide as a correction coefficient for the theoretical amount of ammonia; and

adding an ammonia absorbent equivalent to the corrected theoretical amount of ammonia $\pm 10\%$, preferably $\pm 5\%$, more preferably $\pm 3\%$, and still more preferably $\pm 2\%$, to the ammonia-based desulfurization device through an ammonia metering means and an ammonia control valve, and then automatically controlling the actual ammonia flow rate based on the actual $SO_2$ concentration and change trend provided by the outlet CEMS as a feedback, thereby achieving automatic ammonia addition.

The details and preferences of the present automatic ammonia-adding method are the same as described above for the present automatic ammonia-adding system.

The technique of the present invention improves the automation degree of the ammonia-based desulfurization device through automatic ammonia addition, will not have the $SO_2$ concentration and total dust in the outlet clean flue gas exceeding standard because of inlet gas amount and $SO_2$ concentration fluctuations, makes full use of the measured items at the inlet and outlet CEMSs and automatic statistics and computing function of the distributed control system, and reduces investment.

Under the conditions that the $SO_2$ concentration is not more than 30000 mg/Nm$^3$ and the total dust concentration is not more than 50 mg/Nm$^3$ in the raw flue gas, the ammonia-based desulfurization device may achieve a $SO_2$ concentration in the clean flue gas of no more than 35 mg/Nm$^3$, a total dust (including aerosol) concentration in the clean flue gas of no more than 5 mg/Nm$^3$, an ammonia slip in the clean flue gas of no more than 3 mg/Nm$^3$, and an ammonia recovery of no less than 99%.

Embodiments

The following embodiments are provided to illustrate the present invention, rather than limiting the scope of the present invention.

Embodiment 1

A raw flue gas was treated by using an ammonia-based desulfurization device including an automatic ammonia addition system of the present invention as shown in Fig. 1, wherein 1 is an absorption tower, 2 is an ammonia supply system, 3 is an ammonia control valve, 4 is a mass flow meter as an ammonia metering means, 5 is the raw flue gas, 6 is a circulating pump, 7 is an inlet CEMS, 8 is an outlet CEMS, and 9 is an oxidation section. The gas amount of the raw flue gas is 360000-510000 Nm$^3$/h, the SO$_2$ concentration is 1000-30000 mg/Nm$^3$, and the total dust concentration is 15-30 mg/Nm$^3$.

An ammonia absorbent supplied by the ammonia supply system 2 is liquid ammonia.

Double control valves, i.e, a main ammonia control valve 31 and an auxiliary ammonia control valve 32, are used to control automatic ammonia addition, wherein the inlets of the ammonia control valves 3 are connected to the ammonia supply system 2, the outlets of the ammonia control valves 3 are connected to the ammonia addition points, such as the oxidization section 9 and the circulation pump 6, and the amount of ammonia added through the main ammonia control valve 31 is 99% of the corrected theoretical amount of ammonia.

The absorption tower 1 is divided into the oxidation section 9, a cooling-and-washing section, a washing desulfurization section, and a fine particulate matters control section, and is section-wise controlled, wherein the cooling-and-washing section, the washing desulfurization section, and the fine particulate matters control section are respectively provided with 2/4/2 spray layers 21, the cooling-and-washing section concentrates the circulated washing liquid while cooling the raw flue gas 5, the washing desulfurization section removes by absorption sulfur dioxide in the flue gas, inhibits ammonia slip and aerosol formation, and the fine particulate matters control section scrubs off the fine particulate matters.

The ammonia-containing desulfurization agent is added at the following locations: upper and lower layers of the oxidation section 9, and optionally inlet and outlet of the circulating pump 6, wherein the amount added at the upper layer of the oxidation section 9 is 60-90% of the total weight, the amount added at the lower layer of the oxidation section 9 is 10-30% of the total weight, and the amount added at the inlet and outlet of the circulating pump 6 is 0-15% of the total weight.

In the liquid distributor of the washing desulfurization section, the liquid-to-gas ratio in each layer is 1.2 L/m$^3$, the spray coverage in each layer is 200%, and the total spray coverage in the absorption section is 650%.

In the fine particulate matters control section, the liquid-to-gas ratio in each layer is 1.1 L/m$^3$, and the spray coverage is 180%.

The upper part of the absorption section is provided with a 2-layer demister 12, including 1 layer of ridge and 1 layer of baffle; the upper part of the fine particulate matters control section is provided with a 3-layer demister, including 2 layers of ridges and 1 layer of screen. The measured items for the inlet CEMS 7 include gas amount, SO$_2$ concentration, NO$_x$ content, water content, dust content, temperature and pressure.

The measured items for the outlet CEMS 8 include gas amount, SO$_2$ concentration, water content, dust content, temperature, pressure, nitrogen oxides content and free ammonia content.

The ammonia supply system 2 includes a liquid ammonia spherical tank, an ammonia unloading compressor, an ammonia supply pump and an accident spray device, and the ammonia metering means 4 is a mass flow meter.

The process flow is as follows:

the raw flue gas 5 enters from the middle-lower part of the absorption tower 1, and is then emitted from the flue gas outlet on the top of the tower successively after cooling-and-washing, washing for desulfurization, and removing fine particulate matters by a washing liquid circulated by the circulating pump 6; and

the ammonia supply system 2 supplements the liquid ammonia absorbent through the main ammonia control valve 31 and the auxiliary ammonia control valve 32 to the ammonia addition points, such as the oxidization section 9 and the circulation pump 6.

The circulating washing liquid is oxidized, then concentrated to a solid content of 15 wt.% in the cooling-and-washing process, and then processed to an ammonium sulfate product through an ammonium sulfate post-processing system.

The circulating liquid for absorption is oxidized by compressed air in the oxidation section 9, whereby sulfite contained therein is oxidized into sulfate. The upper solution of the oxidation section 9 has an oxidation rate of 95%, a density of 1.12 g/L, and a pH of 5.6, while the lower solution has an oxidation rate of 99.2%, a density of 1.13 g/L, and a pH of 4.7.

The empty tower gas velocity of the absorption tower 1 is 2.85 m/s.

The operating temperature of the washing desulfurization section is 51 °C.

The operating temperature of the fine particulate matters control section is 49°C.

Specific control steps are as follows:

1) acquiring relevant data by a DCS: an inlet gas amount of 395000 Nm$^3$/h, an inlet SO$_2$ concentration of 2112 mg/Nm$^3$, an outlet gas amount of 405000 Nm$^3$/h, an outlet SO$_2$ concentration of 24 mg/Nm$^3$, an actual cumulative amount of added liquid ammonia of 1940 t, and an actual cumulative amount of removed sulfur dioxide of 3653 t;

2) predetermining the outlet $SO_2$ concentration of 23.9 mg/Nm$^3$ by the DCS;

3) calculating a theoretical amount of ammonia = (395000*2112 - 405000*23.9)/1000/1000/64*34 = 438 kg/h;

4) calculating a correction coefficient for the theoretical amount of ammonia = 1940/34/3653*64 = 0.9997;

5) calculating a corrected theoretical amount of ammonia = 438*0.9997 = 437.85 kg/h;

6) adding the liquid ammonia at a flow rate of 433.47 kg/h (i.e., 437.85 kg/h*0.99) through the mass flow meter 4 and the main ammonia control valve 31;

7) acquiring the actual $SO_2$ concentration of the outlet CEMS 8, 23.9 mg/Nm$^3$;

8) controlling the auxiliary ammonia control valve 32 based on the actual $SO_2$ concentration and change trend of the outlet CEMS 8 as a feedback to control the outlet $SO_2$ concentration to 23.5 mg/Nm$^3$; and

9) acquiring actual total ammonia flow rate of 438 kg/h and integrating and acquiring the actual amount of removed sulfur dioxide and integrating, to conduct the next round of control.

When a change rate of a product of the inlet gas amount and the inlet $SO_2$ concentration is less than or equal to 2%, the openness degree of the main ammonia control valve 31 remains unchanged, and the actual $SO_2$ value of the outlet CEMS 8 is controlled to 20-25 mg/Nm$^3$ through the auxiliary ammonia control valve 32. When the change rate of the product of the inlet gas amount and the inlet $SO_2$ concentration is more than 2%, the openness degree of the main ammonia control valve 31 is calculated and adjusted according to the above steps, and the actual $SO_2$ value of the outlet CEMS 8 is controlled to 20-25 mg/Nm$^3$ by controlling the auxiliary ammonia control valve 32.
Technical effects: in the clean flue gas, $SO_2$: 23.6 mg/Nm$^3$, total dust (including aerosol): 1.9 mg/Nm$^3$, ammonia slip: 0.55 mg/Nm$^3$; and ammonia recovery: 99.4%.
Although particular embodiments of the present invention have been described above, it would be appreciated by those skilled in the art that these are only illustrative description, and the scope of protection of the present invention is limited by the accompanying claims. Various alterations or modifications of these embodiments may be made by those skilled in art without departing from the principles and spirit of the present invention. Of course, all of these alterations and modifications shall fall within the scope of protection of the present invention.

## Claims

1. An automatic ammonia-adding system for an ammonia-based desulfurization device, using multi-stage control, automatically calculating a theoretical amount of ammonia to be added based on gas amounts provided by an inlet continuous emission monitoring system (CEMS) and an outlet CEMS of the ammonia-based desulfurization device or associated gas amounts, a $SO_2$ concentration provided by the inlet CEMS, and a predetermined $SO_2$ concentration of the outlet CEMS; calculating a corrected theoretical amount of ammonia using half of the ratio of the actual amount of added ammonia to the actual amount of removed sulfur dioxide as a correction coefficient for the theoretical amount of ammonia; adding an ammonia absorbent equivalent to the corrected theoretical amount of ammonia ±10% to the ammonia-based desulfurization device through an ammonia metering means and an ammonia control valve; and then automatically controlling the actual ammonia flow rate based on the actual $SO_2$ concentration and change trend provided by the outlet CEMS as a feedback, thereby achieving automatic ammonia addition.

2. The automatic ammonia-adding system according to claim 1, comprising an absorption tower, an ammonia supply system, an ammonia control valve, an ammonia metering means, a circulating pump, an inlet CEMS, an outlet CEMS and an oxidation section.

3. The automatic ammonia-adding system according to claim 1 or 2, wherein the gas amounts of the inlet and outlet CEMSs or associated gas amounts, the $SO_2$ concentrations of the inlet and outlet CEMSs, and the data of the ammonia metering are uploaded to a DCS to calculate the actual amount of added ammonia and the actual amount of removed sulfur dioxide, and then calculate the theoretical amount of ammonia to be added, the correction coefficient for the amount of ammonia, and the corrected theoretical amount of ammonia.

4. The automatic ammonia-adding system according to any one of claims 1 to 3, wherein the theoretical amount of ammonia to be added, the correction coefficient for the theoretical amount of ammonia, and the corrected theoretical amount of ammonia are calculated as follows:

theoretical amount of ammonia = (gas amount of the inlet CEMS or associated gas amount $(Nm^3/h)^*$ inlet $SO_2$ concentration $(mg/Nm^3)$ - gas amount of the outlet CEMS or associated gas amount $(Nm^3/h)^*$ predetermined $SO_2$ concentration of the outlet CEMS $(mg/Nm^3))/1000/1000/64^*34$ kg/h

correction coefficient for theoretical amount of ammonia = ratio of actual molar number of added ammonia to actual molar number of removed sulfur dioxide/2

corrected theoretical amount of ammonia = theoretical amount of ammonia * correction coefficient for theoretical amount of ammonia.

5. The automatic ammonia-adding system according to any one of claims 1 to 4, wherein an outlet $SO_2$ concentration gradient is used as steps of the calculation of the correction coefficient for the theoretical amount of ammonia.

6. The automatic ammonia-adding system according to any one of claims 1 to 5, wherein a slope of temporal curve of the outlet $SO_2$ concentration value is used as a step to judge the outlet $SO_2$ concentration change trend.

7. The automatic ammonia-adding system according to any one of claims 1 to 6, having at least one of the following characteristics:

   - the ammonia absorbent supplied by the ammonia supply system is one or more of liquid ammonia, aqueous ammonia and gas ammonia;
   - the automatic ammonia-adding system uses one or more ammonia control valves, preferably 2 ammonia control valves;
   - the ammonia metering means is a flow meter and/or a metering pump;
   - measured items for the inlet CEMS further include water content, temperature and pressure;
   - measured items for the outlet CEMS further include water content, temperature and pressure; and
   - the associated gas amount, e.g. a gas amount calculated from a boiler load and a boiler air amount, is used to replace gas amounts of the inlet and outlet CEMSs.

8. The automatic ammonia-adding system according to claim 1, using a plurality of ammonia control valves having different control abilities.

9. The automatic ammonia-adding system according to claim 8, wherein a control valve with a large control ability is used to control the addition of 90-99% of corrected theoretical amount of ammonia, and a control valve with a small control ability is used for automatic feedback adjustment and control.

10. The automatic ammonia-adding system according to claim 1, wherein the gas amount of the inlet CEMS is used to substitute for the gas amount of the outlet CEMS or vice versa, and water content, temperature and pressure data of the inlet and outlet CEMSs are used for gas amount correction calculation.

11. An automatic ammonia-adding method for an ammonia-based desulfurization device, comprising:

   automatically calculating a theoretical amount of ammonia to be added from gas amounts provided by an inlet CEMS and an outlet CEMS of the ammonia-based desulfurization device (or associated gas amounts), a $SO_2$ concentration provided by the inlet CEMS, and a predetermined $SO_2$ concentration of the outlet CEMS;
   calculating a corrected theoretical amount of ammonia using half of the ratio of the actual amount of added ammonia to the actual amount of removed sulfur dioxide as a correction coefficient for the theoretical amount of ammonia; and

adding an ammonia absorbent equivalent to the corrected theoretical amount of ammonia ±10%, preferably ±5%, more preferably ±3%, and still more preferably ±2%, to the ammonia-based desulfurization device through an ammonia metering means and an ammonia control valve, and then automatically controlling the actual ammonia flow rate based on the actual $SO_2$ concentration and change trend provided by the outlet CEMS as a feedback, thereby achieving automatic ammonia addition.

12. The automatic ammonia-adding method according to claim 11, wherein the theoretical amount of ammonia to be added, the correction coefficient for the theoretical amount of ammonia, and the corrected theoretical amount of ammonia are calculated as follows:

theoretical amount of ammonia = (gas amount of the inlet CEMS or associated gas amount $(Nm^3/h)$* inlet $SO_2$ concentration $(mg/Nm^3)$ - gas amount of the outlet CEMS or associated gas amount $(Nm^3/h)$* predetermined $SO_2$ concentration of the outlet CEMS $(mg/Nm^3))/1000/1000/64*34$ kg/h

correction coefficient for theoretical amount of ammonia = ratio of actual molar number of added ammonia to actual molar number of removed sulfur dioxide/2

corrected theoretical amount of ammonia = theoretical amount of ammonia * correction coefficient for theoretical amount of ammonia.

13. The automatic ammonia-adding method according to claim 11, wherein an outlet $SO_2$ concentration gradient is used as steps of the calculation of the correction coefficient for the theoretical amount of ammonia.

14. The automatic ammonia-adding method according to claim 11, wherein a slope of temporal curve of the outlet $SO_2$ concentration value is used as a step to judge the outlet $SO_2$ concentration change trend.

15. The automatic ammonia-adding method according to any one of claims 11 to 14, having at least one of the following characteristics:

- the ammonia absorbent supplied by the ammonia supply system is one or more of liquid ammonia, aqueous ammonia and gas ammonia;
- the ammonia control valve comprises one or more ammonia control valves, preferably 2 ammonia control valves;
- the ammonia metering means is a flow meter and/or a metering pump;
- measured items for the inlet CEMS further include water content, temperature and pressure;
- measured items for the outlet CEMS further include water content, temperature and pressure; and
- the associated gas amount, e.g. a gas amount calculated from a boiler load and a boiler air amount, is used to replace gas amounts of the inlet and outlet CEMSs.

16. The automatic ammonia-adding method according to claim 11, wherein the ammonia control valve comprises a plurality of ammonia control valves having different control abilities.

17. The automatic ammonia-adding method according to claim 16, wherein a control valve with a large control ability is used to control the addition of 90-99% of corrected theoretical amount of ammonia, and a control valve with a small control ability is used for automatic feedback adjustment and control.

18. The automatic ammonia-adding method according to claim 1, wherein the gas amount of the inlet CEMS is used to substitute for the gas amount of the outlet CEMS or vice versa, and water content, temperature and pressure data of the inlet and outlet CEMSs are used for gas amount correction calculation.

**FIG. 1**

| Relevant data of inlet CEMS | Relevant data of outlet CEMS |

Calculate corrected theoretical amount of ammonia

A DCS acquires inlet gas amount, inlet SO₂ concentration, outlet gas amount and outlet SO₂ concentration, and acquires the amount of ammonia added and cumulative amount of removed SO₂

Predict outlet SO₂ concentration

Calculate theoretical amount of ammonia

Calculate correction coefficient for theoretical amount of ammonia

Ammonia addition control through main control valve

Actual outlet SO₂ concentration

Feedback control through auxiliary control valve

Actual cumulative amount of removed SO₂ and cumulative amount of ammonia added

**FIG. 2**

Europäisches
Patentamt

European
Patent Office

Office européen
des brevets

# EUROPEAN SEARCH REPORT

Application Number

EP 17 17 7646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 203 253 348 U (QINGDAO HONGTAIXIANG ENVIRONMENTAL PROT CO LTD) 30 October 2013 (2013-10-30) * abstract * * page 4, paragraph 3 * | 1-18 | INV. B01D53/34 B01D53/50 |
| A | CN 205 650 071 U (ZHANG BO) 19 October 2016 (2016-10-19) * abstract * | 1-18 | |
| A | CN 106 422 705 A (DALIAN KELIN ENERGYSAVING & ENV PROT CO LTD) 22 February 2017 (2017-02-22) * abstract * | 1 | |

TECHNICAL FIELDS
SEARCHED (IPC)

B01D

The present search report has been drawn up for all claims

| Place of search | Date of completion of the search | Examiner |
|---|---|---|
| The Hague | 4 December 2017 | Artos Fernández, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 17 17 7646

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2017

| Patent document cited in search report | | Publication date | Patent family member(s) | Publication date |
|---|---|---|---|---|
| CN 203253348 | U | 30-10-2013 | NONE | |
| CN 205650071 | U | 19-10-2016 | NONE | |
| CN 106422705 | A | 22-02-2017 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1283346 C
- CN 1321723 C
- CN 100428979 C

- CN 201710154157
- CN 201610322999